# EUROPÄISCHE PATENTSCHRIFT

(11) **EP 1 361 168 B1**
(45) Veröffentlichungstag und Bekanntmachung des Hinweises auf die Patenterteilung: **14.12.2011**
(21) Anmeldenummer: 03009173.0
(22) Anmeldetag: 22.04.2003
(51) Int. Cl.: B32B 27/32, B32B 27/36, B32B 7/10, C09J 7/02

(54) **Kunststoff-Folie**
Plastic film
Film plastique

(30) Priorität: 11.05.2002 DE 10221143
(43) Veröffentlichungstag der Anmeldung: 12.11.2003
(73) Patentinhaber: Huhtamaki Ronsberg Zweigniederlassung der Huhtamaki Deutschland GmbH & Co. KG., 87671 Ronsberg/Allgäu (DE)
(72) Erfinder: Battegazzore, Rinaldo, Dr., 15058 Viauzzolo (IT); Michalsky, Andreas, 87671 Ronsberg (DE); Hertlein, Jochen, Dr., 61118 Bad Vilbel (DE); Bachmann, Rolf, 1800 Vevey (CH)
(74) Vertreter: Trossin, Hans-Jürgen

(56) Entgegenhaltungen:
- EP-A- 0 514 803
- EP-A- 0 870 695
- EP-A- 0 891 930
- WO-A-01/25109

## Beschreibung

Die Erfindung bezieht sich auf eine Kunststoffolie, insbesondere zum Verpacken von quaderförmigen Gegenständen, die vorzugsweise während des Verpackens geformt werden, wie besonders Suppenwürfeln, mit einer Basisfolie aus einem Polyolefin, die einseitig metallisiert ist.

Aus DE-A-100 21 687 ist eine derartige Folie bekannt, die wenigstens einseitig mit einer Klebe- oder Siegelschicht versehen ist.

EP-A-870695 offenbart eine mehrschichtige Kunststoffolie zum Verpacken von quaderförmigen Gegenständen, die den folgenden Aufbau aufweist: Siegelstreifen aus einer Kaltsiegelklebermasse; eine Basisfolie aus einem metallisierten orientierten Polypropylen oder aus einem aufgeschäumten Polypropylen; eine façonartig aufgetragene Releaseschicht, deren Auftragsflächen mit denen des Kaltsiegelklebers abgestimmt sein können.

Hiervon ausgehend liegt der Erfindung die Aufgabe zugrunde, eine Kunststoffolie der genannten Art so auszugestalten, daß sie rationell herstellbar ist und dem zu verpackenden Gegenstand einen optimalen Schutz gewährt.

Diese Aufgabe wird erfindungsgemäß dadurch gelöst, daß als Basisfolie eine orientierte Polypropylen-Folie, vorzugsweise eine biaxial orientierte Polypropylen-Folie oder eine PET-Folie vorgesehen ist, auf deren die Metallisierung tragender Seite ein Druckauftrag vorgesehen ist, während auf der von der Metallisierung abgewandten Seite der Basisfolie ein Kaltkleber faconartig, vorzugsweise bandförmig, aufgetragen ist.

Der zum Verschließen einer aus einem Abschnitt der Kunststoffolie hergestellten Verpackung vorgesehene Kaltkleber wird dabei nur in der zum Erreichen einer gewünschten Verschlussdichte notwendigen Menge aufgetragen.

Eine weitere vorteilhafte Ausgestaltung der Erfindung liegt darin, daß der Druckauftrag mit einem faconartig aufgetragenen Releaselack teilweise abgedeckt ist, wobei die Auftragsflächen mit denen des Kaltklebers abgestimmt sind.

Damit wird ein Ankleben übereinander liegender Lagen der Kunststoffolie beim Aufwickeln als Rolle wirksam verhindert.

Als sehr günstig hat sich eine weitere Ausgestaltung der Erfindung erwiesen, gemäß welcher zwischen der Metallisierung und dem Druckauftrag eine Primer- bzw. Haftvermittlerschicht vorgesehen ist.

Damit wird eine haltbare Verbindung des Druckauftrages mit der Metallisierung erzielt.

Eine weitere vorteilhafte Ausgestaltung der Erfindung liegt darin, daß als Basisfolie eine kompakte Folie vorgesehen ist.

Erfindungsgemäß kann jedoch auch als Basisfolie eine Folie mit Hohlräumen vorgesehen sein.

An den die Hohlräume umgebenden Rändern tritt eine Lichtbrechung auf, welche der Folie eine Opazität verleiht.

Erfindungsgemäß können die Hohlräume als Vakuolen ausgebildet sein, die beim Strecken der Folie entstanden sind.

Eine weitere Möglichkeit der Ausgestaltung der Hohlräume besteht darin, daß diese beim Aufschäumen der Folie entstanden sind.

Als sehr vorteilhaft hat es sich ergeben, wenn gemäß der Erfindung die kompakte Basisfolie eine Stärke von etwa 10 bis 100 µm, vorzugsweise 20 bis 50 µm, insbesondere 28 bis 32 µm aufweist.

Gemäß einer weiteren vorteilhaften Ausgestaltung der Erfindung ist vorgesehen, daß die Hohlräume aufweisende Basisfolie eine Stärke von etwa 10 bis 100 µm, vorzugsweise 20 bis 50 µm, insbesondere 35 bis 42 µm hat.

In der Zeichnung ist die Erfindung anhand von zwei Ausführungsbeispielen veranschaulicht. Dabei zeigen:
- Fig.1: eine schematische Darstellung eines Schichtaufbaues einer Kunststoffolie mit einer kompakten Basisfolie, die einseitig metallisiert ist und
- Fig.2: eine ebenfalls schematische Darstellung einer weiteren Kunststoffolie mit einer Basisfolie die Hohlräume aufweist.

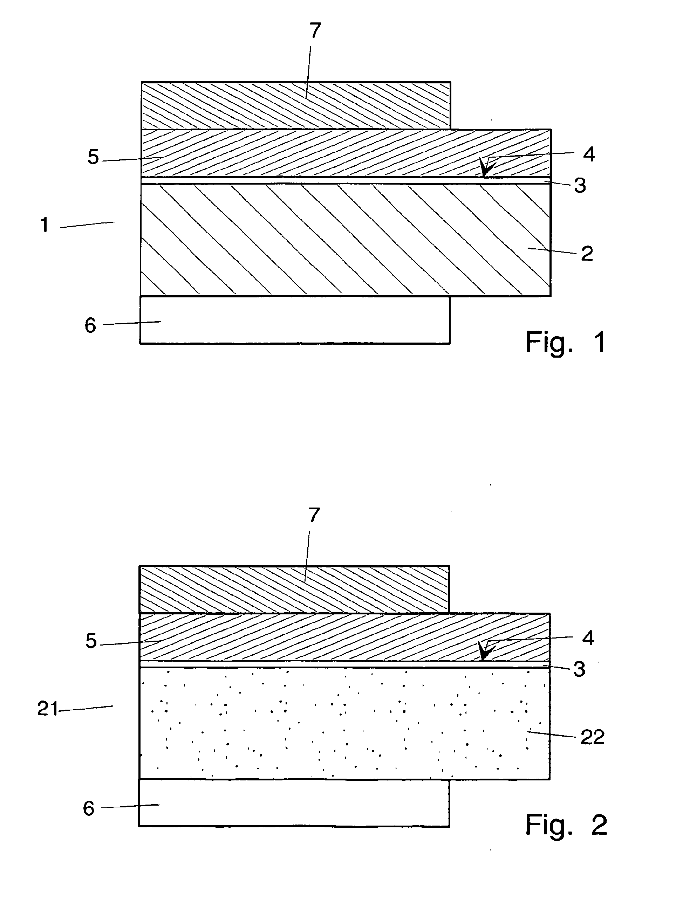

Mit 1 ist in Fig. 1 ein Kunststoffolie bezeichnet, die eine Basisfolie 2 aus orientiertem Polypropylen (OPP) in einer Stärke von 30µm aufweist. Diese Basisfolie 2 ist einseitig mit einer Metallisierung 3 versehen, die über eine Primer- bzw. Haftvermittlerschicht 4 einen Druckauftrag 5 trägt. Auf ihrer vom Druckauftrag bzw. der Metallisierung abgekehrten Seite ist die Basisfolie 2 mit einem Kaltkleber 6 versehen, der faconartig aufgetragen ist. Auf der anderen Seite ist der Druckauftrag 5 mit einer Releaseschicht 7 versehen, die entsprechend dem Kaltkleber-Auftrag angeordnet ist. Beim Aufwickeln der Kunststoffolie liegen der Kaltkleber und die Releaseschicht 7 übereinander und verhindert so ein Ankleben des Kaltklebers 6 an der benachbarten Seite der Kunststoffolie.

Anstelle von OPP kann die Basisfolie auch aus PET bestehen.

Beim Ausführungsbeispiel nach Fig.2 liegt ein entsprechender Aufbau einer Kunststoffolie 21 vor. Die Basisfolie 22 besteht allerdings aus einer opaken, orientierten Polypropylenfolie (OPP), deren Opazität durch beim Recken entstandene Vakuolen hervorgerufen wird. Diese Basisfolie hat eine Dicke von 38µm und ist wieder einseitig mit einer Metallisierung 3 versehen, auf der eine Primer- bzw. Haftvermittlerschicht 4 aufgetragen ist. Diese Primerschicht gibt dem anschließenden Druckauftrag 5 einen festen Halt. Die von der Metallisierung abgewandte Seite der Basisfolie 22 trägt einen faconartig aufgetragenen Kaltkleber 6, dessen Auftrag entsprechend einer auf dem Druckauftrag 5 aufgetragenen Releaseschicht 7 vorgesehen ist, wodurch ein Ankleben des Kaltklebers beim Aufwickeln der Kunststoffolie verhindert wird.

Zur Verbesserung der Wickelbarkeit der Kunststoffolie werden hierbei neben der Releaseschicht bzw. neben dem Kaltkleber die Flächen mit Beschichtungen aufgefüllt.

Die Basisfolie kann ihre Opazität auch durch Aufschäumen erhalten haben, wobei an den im Inneren entstandenen Bläschen ebenfalls eine Lichtbrechung stattfindet.

## Patentansprüche

1. Kunststoffolie(1,21), insbesondere zum Verpacken von quaderförmigen Gegenständen, die vorzugsweise während des Verpackens geformt werden, wie besonders Suppenwürfcln, mit einer Basisfolie(2,22) aus einem Polyolefin oder einem Polyethylenterephthalat, die wenigstens einseitig metallisiert ist, **dadurch gekennzeichnet, daß** als Basisfolie(2,22) eine orientierte Polypropylen-Folie, vorzugsweise eine biaxial orientierte Polypropylen-Folie oder eine PET-Folie vorgesehen ist, auf deren die Metallisierung(3) tragender Seite ein Druckauftrag(5) vorgesehen ist, während auf der von der Metallisierung(3) abgewandten Seite der Basisfolie(2,22) ein Kaltkleber(6) faconartig, vorzugsweise bandförmig, aufgetragen ist, wobei der Druckauftrag(5) mit einem faconartig aufgetragenen Releaselack(7) teilweise abgedeckt ist, wobei die Auftragsflächen mit denen des Kaltklebers(6) abgestimmt sind, wobei neben dem Releaselack bzw. neben dem Kaltkleber die Flächen mit Beschichtungen aufgefüllt sind.

2. Kunststoffolie nach Anspruch 1, **dadurch gekennzeichnet, daß** zwischen der Metallisierung(3) und dem Druckauftrag(5) eine Primer- bzw. Haftvermittlerschicht(4) vorgesehen ist.

3. Kunststoffolie nach Anspruch 1 oder 2, **dadurch gekennzeichnet, daß** als Basisfolie(2) eine kompakte Folie vorgesehen ist.

4. Kunststoffolie nach Anspruch 1 oder 2, **dadurch gekennzeichnet, daß** als Basisfolie(22) eine Folie mit Hohlräumen vorgesehen ist.

5. Kunststoffolie nach Anspruch 4, **dadurch** gekennzeichet, daß die Hohlräume als Vakuolen ausgebildet sind, die beim Strecken der Folie entstanden sind.

6. Kunststoffolie nach Anspruch 4, **dadurch gekennzeichnet, daß** die Hohlräume durch Aufschäumen entstanden sind.

7. Kunststoffolie nach Anspruch 3, **dadurch gekennzeichnet**, die kompakte Basisfolie(2) eine Stärke von etwa 10 bis 100 µm, vorzugsweise 20 bis 50 µm, insbesondere 28 bis 32 µm aufweist.

8. Kunststoffolie nach Anspruch 4, **dadurch gekennzeichnet, daß** die Hohlräume aufweisende Basisfolie(22) eine Stärke von etwa 10 bis 100 µm, vorzugsweise 20 bis 50 µm, insbesondere 35 bis 42 µm hat.

## Claims

1. Plastics film (1, 21) in particular for packaging cuboid articles which are preferably shaped during the packaging, particularly such as stock cubes, having a base film (2, 22) which is made of a polyolefin or a polyethylene terephthalate and which is metallised on at least one side, **characterised in that** what is provided as a base film (2, 22) is an oriented polypropylene film, preferably a biaxially oriented polypropylene film, or a PET film, on whose side carrying the metallising (3) is provided applied printing (5), while a cold-seal adhesive (6) is applied in specific regions, and preferably in strip form, to the side of the base film (2, 22) remote from the metallising (3), the applied printing (5) being partly covered by a release lacquer (7) applied in specific regions, the areas to which it is applied being matched to those to which the cold-seal adhesive (6) is applied, these respective areas being filled by coatings in addition to the release lacquer and the cold-seal adhesive.

2. Plastics film according to claim 1, **characterised in that** a layer of primer (4) is provided between the metallising (3) and the applied printing (5).

3. Plastics film according to claim 1 or 2, **characterised in that** a compact film is provided as the base film (2).

4. Plastics film according to claim 1 or 2, **characterised in that** a film having cavities is provided as the base film (22).

5. Plastics film according to claim 4, **characterised in that** the cavities take the form of vacuoles which form when the film is being stretched.

6. Plastics film according to claim 4, **characterised in that** the cavities form as a result of foaming.

7. Plastics film according to claim 3, **characterised in that** the compact base film (2) is of a thickness of approximately 10 to 100 µm, preferably 20 to 50 µm, in particular 28 to 32 µm.

8. Plastics film according to claim 4, **characterised in that** the base film (22) having cavities is of a thickness of approximately 10 to 100 µm, preferably 20 to 50 µm, in particular 35 to 42 µm.

## Revendications

1. Feuille de plastique (1, 21) en particulier pour le conditionnement d'objets parallélépipédiques qui sont de préférence mis en forme pendant le conditionnement, comme en particulier les bouillon-cubes, avec une feuille de base (2, 22) en polyoléfine ou en polyéthylène-téréphtalate, qui est métallisée au moins d'un côté, **caractérisée en ce qu'**est prévue comme feuille de base (2, 22), une feuille de polypropylène orientée, de préférence une feuille de polypropylène orientée biaxialement ou une feuille de PET, sur le côté portant la métallisation (3) duquel une application d'impression (5) est prévue, alors que sur le côté détourné de la métallisation (3) de la feuille de base (2, 22), un adhésif à froid (6) est appliqué à façon, de préférence en bande, l'application d'impression (5) étant recouverte partiellement d'une laque de décollement (7) appliquée à façon, les surfaces d'application correspondant à celles de l'adhésif à froid (6), les surfaces étant remplies de revêtements, parallèlement à la laque de détachement ou à l'adhésif à froid.

2. Feuille de plastique selon la revendication 1, **caractérisée en ce qu'**entre la métallisation (3) et l'application d'impression (5) est prévue une couche d'apprêt ou d'adhésif (4).

3. Feuille de plastique selon la revendication 1 ou 2, **caractérisée en ce qu'**une feuille compacte est prévue comme feuille de base (2).

4. Feuille de plastique selon la revendication 1 ou 2, **caractérisée en ce qu'**une feuille comportant des espaces creux est prévue comme feuille de base (22).

5. Feuille de plastique selon la revendication 4, **caractérisée en ce que** les espaces creux sont conçus comme des vacuoles qui se forment lors de l'étirement de la feuille.

6. Feuille de plastique selon la revendication 4, **caractérisée en ce que** les espaces creux sont conçus par moussage.

7. Feuille de plastique selon la revendication 3, **caractérisée en ce que** la feuille de base compacte (2) présente une résistance d'environ 10 à 100 µm, de préférence 20 à 50 µm, en particulier de 28 à 32 µm.

8. Feuille de plastique selon la revendication 4, **caractérisée en ce que** la feuille de base (22) présentant les espaces creux a une résistance d'environ 10 à 100 µm, de préférence 20 à 50 µm, en particulier de 35 à 42 µm.
